# EUROPEAN PATENT SPECIFICATION

(11) **EP 2 966 012 B1**
(45) Date of publication and mention of the grant of the patent: **28.03.2018**
(21) Application number: 14761079.4
(22) Date of filing: 19.02.2014
(51) Int. Cl.: B65G 17/06, B65G 17/08

(54) **CONVEYOR BELT COMPRISING MEANS FOR PREVENTING ADHESION OF THE TRANSPORTED PRODUCT**
FÖRDERBAND MIT EINEM MITTEL ZUR VERHINDERUNG DER ADHÄSION EINES GEFÖRDERTEN PRODUKTS
BANDE TRANSPORTEUSE AVEC DES MOYENS DESTINÉS À ÉVITER L'ADHÉRENCE DU PRODUIT TRANSPORTÉ

(30) Priority: 06.03.2013 ES 201330319
(43) Date of publication of application: 13.01.2016
(73) Proprietor: Nuñez Bajo, Magdalena, 47003 Valladolid (ES)
(72) Inventor: SAN MIGUEL NUÑEZ, Javier, E-47012 Valladolid (ES)
(74) Representative: Temiño Ceniceros, Ignacio
(86) International application number: PCT/ES2014/070119
(87) International publication number: WO 2014/135724

(56) References cited:
- EP-A2- 0 521 506
- WO-A2-2005/009874
- US-A- 2 000 499
- US-A- 5 004 097
- US-A- 5 004 097
- US-A- 5 101 966

## Description

### OBJECT OF THE INVENTION

An object of the present invention is a conveyor belt with a design that allows, during product transfer, detaching or lifting the transported product up, such that said product is separated from the belt, making transfer thereof easier.

### PRIOR ART

The target technical problem the present invention seeks to solve is product adhesion to the conveyor belt, which enormously complicates product transfer. This adhesion particularly occurs when the product is sticky or when there are elements inherent to the facility that cause said adhesion, such as for example frozen product treatment or gelatinous treatments, among others.
It is generally known in the current state of the art that all links of conveyor belts are designed so that transfers are as smooth as possible during turns, i.e., the polyhedron effect is close to a perfect circle, sharing centers between hinge pins and the ends of links. Based on that premise, different systems have been proposed to make transfer easier, generally in the form of drive and push rods for driving and pushing the product (EP1300349 and ES2344216), literally pushing the product against the transfer area. Other documents implement a comb that is introduced in the module, flush with the transport surface for planar transfers, without lifting or detaching the product. Finally, a third solution used in the state of the art is disclosed in EP2165948, which describes a standard link with elements for independently moving the product, so it is also clear that said products are not adhered, thereby making transfer easier. US 5,101,966 discloses a link for conveyor chains according to the preamble of claim 1.

### DISCLOSURE OF THE INVENTION

The object of the invention is to provide a modular conveyor belt comprising its own means for preventing product adhesion simplifying the general structure of the chain. The key to the present invention is that the conveyor belt comprises at least one link in which the end distance of at least one of its ends, which is the length measured from its rotational axis to its most nearby end, is larger than the upper thickness, which is the length measured from the rotational axis to the upper or transport surface. According to the invention, the link for conveyor chains is defined by a central shaft from which there extend four side projections located in twos and staggered with respect to one another; where said projections are characterized in that the section of all the side projections is the same, i.e., in the form of a bulb, projecting from the central shaft and having a first region substantially narrower than the second region or bulb, where a through hole is located; and where the length between longer and shorter projections is offset by a distance (d). Said through holes coincide with one another in twos, i.e., there is one pair of coinciding holes per side of the central shaft defining a shaft parallel to said central shaft. The second region or bulb is designed as such because it increases the open area.
In another embodiment of the invention, a module for conveyor chains comprises a plurality of links like those previously described, characterized in that a plurality of longer and shorter projections are staggered with respect to one another along a single central shaft, which will have the length that is desired for the width of the conveyor belt.
Finally, the conveyor belt comprises a plurality of modules or links like those indicated, such that at least one end distance of at least one of the links of the chain is longer than the upper thickness so during turns of the chain assembly about an axis, in the moment in which the at least one mentioned link turns, there is a larger circumference and part of the link that is turning projects above the horizontal established by the transport surface, detaching the product that is being transported.

In a preferred embodiment of the invention, the chain is formed by a link like that previously described, in which the end distance of at least one of its ends is longer than the upper thickness, adjacent to a link that does not meet that condition and so on and so forth.

In the embodiment of the invention in which the conveyor belt comprises at least one link like that previously described, during turns of the chain assembly about an axis, there is at least one circumference that is larger than the other due to the difference in turning radius of the longer and shorter projections, wherein said difference in turning radius is precisely the distance, i.e., the difference in lengths between side projections, that causes the longer projections to lift the product up during turns, detaching it from the belt and making transfer thereof easier.

Throughout the description and claims the word "comprises" and variants thereof do not seek to exclude other technical features, additives, components or steps. For the persons skilled in the art, other objects, advantages and features of the invention will be understood in part from the description and in part from the practice of the invention. The following examples and drawings are provided by way of illustration and are not intended to be limiting of the present invention. Furthermore, the present invention covers all possible combinations of particular and preferred embodiments herein indicated.

### BRIEF DESCRIPTION OF THE DRAWINGS

Figure 1 shows a particular embodiment of the link of the modular conveyor belt, object of the present invention
Figure 2 shows an embodiment of a module with ten links, according to the object of the present invention.
Figure 3 shows a perspective view of the modular belt assembly, without any product thereon, as defined in the object of the present invention.
Figure 4 shows a side view of the modular belt object of the present invention, where Figure 4a shows the path of the product during transport, and Figure 4b shows the product during transfer thereof.
Figure 5 shows a view of a chain of the state of the art.
Figure 6 shows a view of the chain of the present invention with a link the end distance of which is longer than its upper thickness.
Figures 7 to 14 show different embodiments of different links (10) and modules (100) formed by said links and designed for carrying out the present invention. Particularly, Figures 7 and 8 correspond to the link and the module formed by same, as in Figures 9-10, 11-12 and 13-14.
Figure 15 shows an assembly between two modules like those shown in Figure 14.
Figure 16 shows a link (10) where the central structure is not a shaft but something completely different which still also meets the conditions of the invention.

### PARTICULAR EMBODIMENT OF THE INVENTION

The attached drawings show a particular embodiment of the present invention. The conveyor belt object of the present invention is of the modular type, comprising a plurality of links (10) which are usually made of plastic.

As indicated, the necessary and sufficient condition for the operation of the conveyor belt comprising a plurality of links (10) is that the end distance (d1) of at least one of the ends of the link (10) is larger than the upper thickness (e1); where the end distance (d1) is the distance between a rotational axis (eg) and the end of said link, while the upper thickness (e1) is the length between said rotational axis (eg) and the upper surface of the link (10). All the particular embodiments meet this condition, regardless of the shape of the link, which will depend on the practical application in each case.

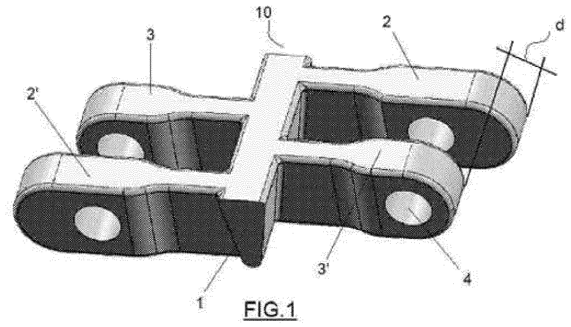

In a particular non-limiting embodiment of the link (10) as shown in Figure 1, the link (10) is defined by a central shaft (1), preferably having a triangular section, from which there extend four side projections (2, 2', 3, 3') located in twos and staggered with respect to one another. Therefore, there are two longer side projections (2, 2'), a first longer side projection (2) located close to the upper end of the central shaft (1) and a second longer side projection (2') located close to the lower end of the central shaft (1), each of them being located on a different side of said central shaft (1).

In addition, there are two shorter side projections (3, 3'), each of them located parallel to the longer side projections in twos, i.e., the first longer side projection (2) is parallel to the second shorter side projection (3'), while the first shorter projection (3) is parallel to the second longer projection (2'), each of the pairs being located on one side of the central shaft (1) offset from one another, such that the first shorter projection (3) is located at the center of the portion of the shaft (1) comprised between the first longer projection (2) and the second shorter projection (3'), and accordingly, said second shorter projection (3') is located at the center of the portion of the shaft (1) comprised between the first shorter projection (3) and the second longer projection (2'). Each of the side projections (2, 2', 3, 3') comprises a through hole (4), said through holes coinciding with one another in twos, i.e., there is one pair of coinciding holes per side of the central shaft (1) defining a shaft (40) parallel to said central shaft (1). The longer side projections (2, 2') are extremely important because the end distance thereof is longer than the upper thickness.

The section of the side projections (2, 2', 3, 3') in this embodiment is the same, in the form of a bulb, projecting from the central shaft with a first region substantially narrower than the second region or bulb, which is where the through hole (4) is located. The length between longer projections (2, 2') and shorter projections (3, 3') is offset by a distance (d) that can vary depending on the desired practical embodiment.

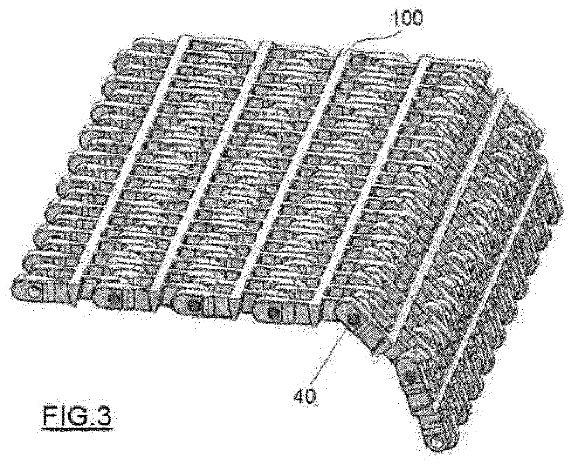

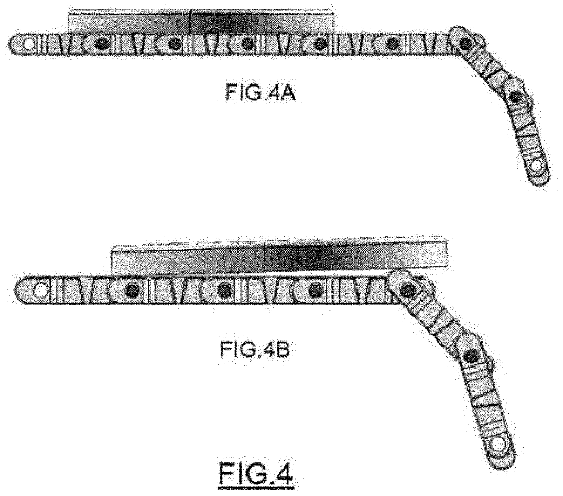

As a result of the structure of the link (10), two circumferences are formed during turns of the chain assembly (see Figures 3 and 4), one being larger than the other, due to the difference in turning radius of the longer projections (2, 2') and shorter projections (3, 3'), wherein said difference in turning radius is precisely distance (d), i.e., the difference in lengths between the side projections, that causes the longer projections (2, 2') to lift the product up during turns, detaching it from the belt, and making transfer thereof easier, as best seen in Figure 4b.

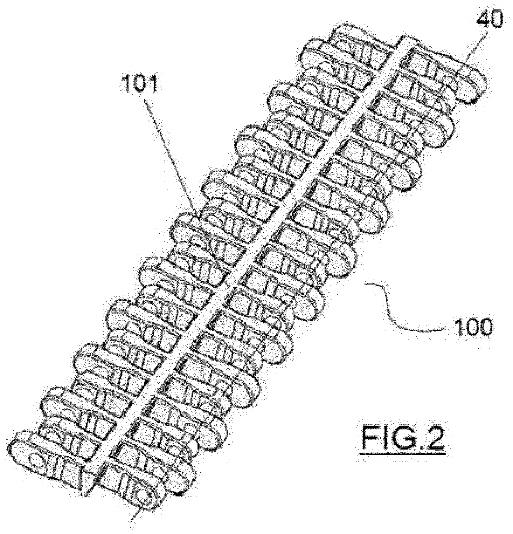

Finally, Figure 2 shows a practical embodiment of a module (100) the structure of which corresponds to ten links (10) such as that previously described, with a single central shaft (101), and which serves to form the conveyor chain of Figure 3. The modules (100) of the chain will logically comprise as many links (10) as needed for the desired width of the end chain.

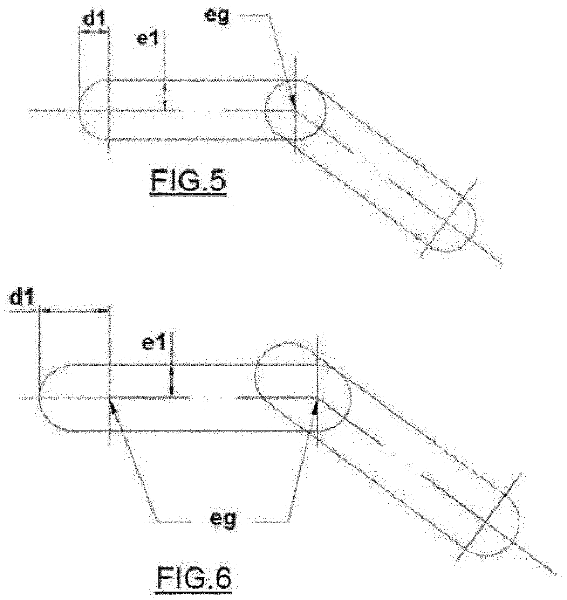

The end distance (d1) in links of the chain is defined as the distance between the rotational axis (eg), which is the axis about which the chain turns, and the end of the link. The upper thickness (e1) is defined as the length between the rotational axis (eg) and the upper or transport surface. The chains of the state of the art used today have an end distance (d1) coinciding with the upper thickness (e1), Figure 5. However, the key to the present invention is that the chain comprises at least one link in which the end distance (d1) of at least one of its ends is larger than the upper thickness (e1), such that product adhesion to the conveyor belt, which is a common fact that enormously complicates product transfer, is avoided at all times, Figure 6.

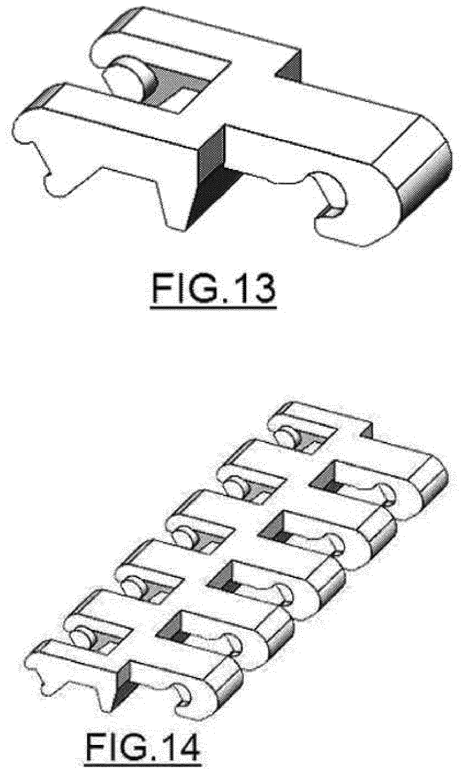

The links of the present invention can be attached to one another by means of a pin in the shaft (40) defined parallel to the central shaft (1) of the links. In another embodiment, the links can be attached to one another without a pin, as seen in Figure 13. Furthermore, some of the links of the chain meeting the condition of the end distance (d1) being larger than the upper thickness (e1) is sufficient because it will depend, for example, on the type of the product that will be placed on the chain and the size of said product. The links can meet the condition of the end distance (d1) being larger than the upper thickness (e1) on only one of their sides or on both sides. Nevertheless, at least one of the links of the chain must meet said condition.

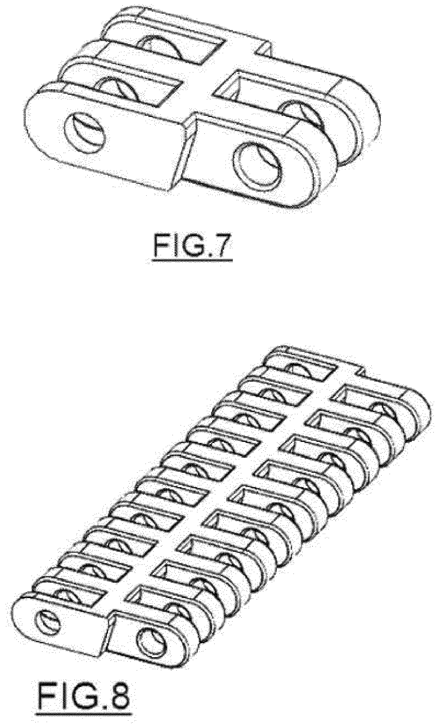

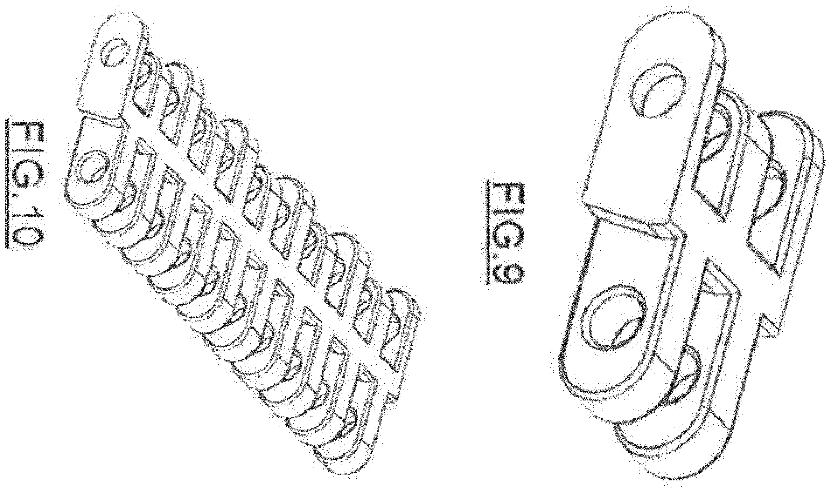

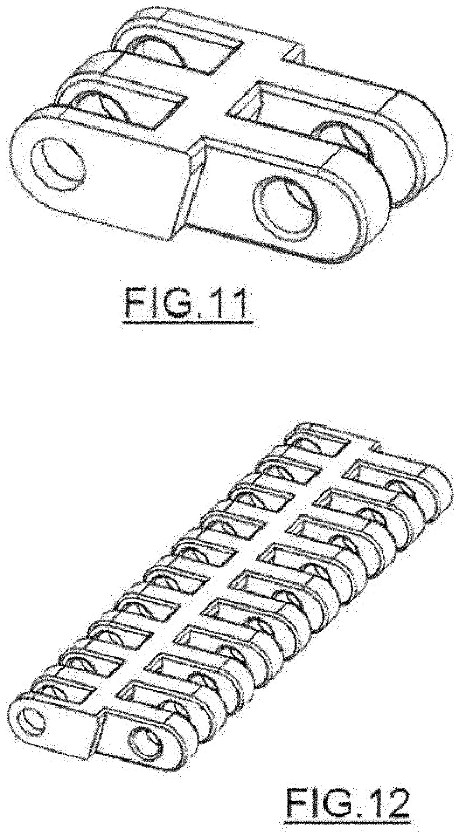

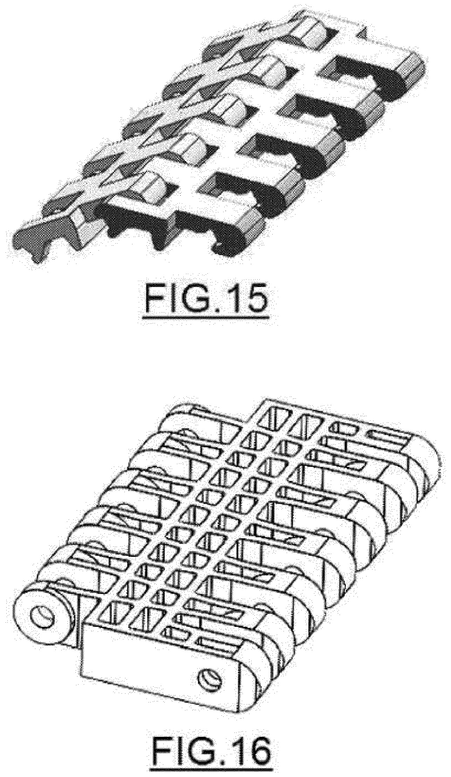

Finally, Figures 7 to 16 show different embodiments of the link (10) and module (100) formed by the different links. In all these practical embodiments, the essential feature of the invention is present, i.e., the end distance (d1) of at least one of the ends of the link (10) is larger than the upper thickness (e1); where said end distance is the distance between a rotational axis (eg) and the end of the link (10) while said upper thickness is the length between said rotational axis (eg) and the upper surface of the link (10).

## Claims

1. A link (10) for conveyor chains of the type that are defined by at least one central core (1) from which a plurality of side projections (2, 2', 3, 3') extend, wherein:
the central core (1) extends transversely to a direction of transport of the conveyor
chain;
the side projections (2, 2', 3, 3') extend in opposed direction therefrom in the direction of transport; wherein the link (10) comprises:
two longer side projections (2, 2'), a first longer side projection (2) located close to a first end of the central core (1) and a second longer side projection (2') located close to a second end of the central core (1), the first longer side projection (2) and the second longer side projection (2') being on a different sides of said central core (1); and two shorter side projections (3, 3'), a first shorter side projection (3) and a second shorter side projection (3'), the shorter side projections (3, 3') located parallel to the longer side projections (2, 2') in pairs, i.e., the first longer side projection (2) is parallel to the second shorter side projection (3'), while the first shorter side projection (3) is parallel to the second longer side projection (2'), each of the pairs being located on one side of the central core (1), the side projections (2, 2', 3, 3') being offset from one another, such that the first shorter side projection (3) is located at the center of the portion of the core (1) comprised between the first longer side projection (2) and the second shorter side projection (3'), and accordingly, said second shorter side projection (3') is located at the center of the portion of the core (1) comprised between the first shorter side projection (3) and the second longer side projection (2'),
**characterized in that** the link comprises, an end distance (d1) of at least one end of the link larger than an upper thickness (e1) wherein:the end distance (d1) is the distance between a rotational axis (eg), which is a coaxial axis where consecutive links rotate with each other, and the end of the link (10);
the upper thickness (e1) is the length between the rotational axis (eg) and an upper surface of the link (10).

2. The link (10) according to claim 1, wherein the central core (1) has a triangular section.

3. The link (10) according to any one of claims 1 to 2, wherein each of the side projections (2, 2', 3, 3') comprises a through hole (4), said through holes (4) coinciding with one another in twos, i.e., there is one pair of coinciding holes (4) per side of the central core (1) defining a shaft (40) parallel to said central core (1).

4. A module (100) for a conveyor chain comprising a plurality links (10) according to any of claims 1 to 3.

5. A conveyor chain comprising a plurality of modules (100) according to claim 4, or a plurality of links (10) according to any of claims 1 to 4, and **characterized in that** during turns of the conveyor chain about an axis there is at least one circumference greater than the turning radius of the conveyor chain due to the difference in turning radius of the longer side projections (2, 2'), wherein said difference in turning radius is precisely the end distance (d1), that causes the longer side projections (2, 2') to lift the product up during turns, detaching the product from the conveyor chain and making transfer of the product easier.

## Patentansprüche

1. Kettenglied (10) für Förderketten der Art, welche von mindestens einem zentralen Kern (1) definiert sind, aus welchem sich eine Vielzahl von seitlichen Vorsprüngen (2, 2', 3, 3') erstrecken, wobei:
sich der zentrale Kern (1) quer zu einer Transportrichtung der Förderkette erstreckt;
sich die seitlichen Vorsprünge (2, 2', 3, 3') in entgegengesetzter Richtung davon in Transportrichtung erstrecken;
wobei das Kettenglied (10) Folgendes umfasst:
zwei längere seitliche Vorsprünge (2, 2'), einen ersten längeren seitlichen Vorsprung (2), welcher sich in der Nähe von einem ersten Ende des zentralen Kerns (1) befindet, und einen zweiten längeren seitlichen Vorsprung (2'), welcher sich in der Nähe von einem zweiten Ende des zentralen Kerns (1) befindet, wobei der erste längere seitliche Vorsprung (2) und der zweite längere seitliche Vorsprung (2') auf einer unterschiedlichen Seite des genannten zentralen Kerns (1) sind; und zwei kürzere seitliche Vorsprünge (3, 3'), einen ersten kürzeren seitlichen Vorsprung (3) und einen zweiten kürzeren seitlichen Vorsprung (3'), wobei sich die kürzeren seitlichen Vorsprünge (3, 3') paarweise parallel zu den längeren seitlichen Vorsprüngen (2, 2') befinden, d.h., der erste längere seitliche Vorsprung (2) ist parallel zum zweiten kürzeren seitlichen Vorsprung (3'), während der erste kürzere seitliche Vorsprung (3) parallel zum zweiten längeren seitlichen Vorsprung (2') ist, wobei sich jedes Paar auf einer Seite des zentralen Kerns (1) befinden, wobei die seitlichen Vorsprünge (2, 2', 3, 3') voneinander versetzt sind, so dass sich der erste kürzere seitliche Vorsprung (3) in der Mitte des Teils des Kerns (1) befindet, welcher zwischen dem ersten längeren seitlichen Vorsprung (2) und dem zweiten kürzeren seitlichen Vorsprung (3') liegt, und dementsprechend, sich der zweite kürzere seitliche Vorsprung (3') in der Mitte des Teils des Kerns (1) befindet, welcher zwischen dem ersten kürzeren seitlichen Vorsprung (3) und dem zweiten längeren seitlichen Vorsprung (2') liegt,
**dadurch gekennzeichnet, dass** das Kettenglied einen Endabstand (d1) aus mindestens einem der Enden des Kettenglieds umfasst, welcher größer ist als die obere Dicke (e1), wobei: der Endabstand (d1) der Abstand zwischen einer Rotationsachse (eg), welche eine koaxiale Achse ist, in welcher aufeinanderfolgende Kettenglieder miteinander rotieren, und dem Ende des Kettenglieds (10) ist; die obere Dicke (e1) die Länge zwischen der Rotationsachse (eg) und einer oberen Oberfläche des Kettenglieds (10) ist.

2. Kettenglied (10) nach Anspruch 1, wobei der zentrale Kern (1) einen dreieckigen Querschnitt aufweist.

3. Kettenglied (10) nach einem der Ansprüche 1 bis 2, wobei jeder der seitlichen Vorsprünge (2, 2', 3, 3') ein Durchgangsloch (4) umfasst, wobei die genannten Durchgangslöcher (4) pärchenweise miteinander übereinstimmen, d.h., es gibt ein Paar von übereinstimmenden Löchern (4) pro Seite des zentralen Kerns (1), welche eine Welle (40) definieren, welche parallel zum genannten zentralen Kern (1) ist.

4. Modul (100) für eine Förderkette umfassend eine Vielzahl von Kettengliedern (10) nach einem der Ansprüche 1 bis 3.

5. Förderkette umfassend eine Vielzahl von Modulen (100) nach Anspruch 4, oder eine Vielzahl von Kettengliedern (10) nach einem der Ansprüche 1 bis 4, und **dadurch gekennzeichnet, dass** es während der Wenden der Förderkette um eine Achse herum mindestens eine Kreislinie gibt, welche größer als der Wenderadius der Förderkette ist, aufgrund von dem Unterschied beim Wenderadius der längeren seitlichen Vorsprünge (2, 2'), wobei der genannte Unterschied beim Wenderadius gerade der Endabstand (d1) ist, welcher verursacht, dass die längeren seitlichen Vorsprünge (2, 2') das Produkt während der Wenden heben, so dass das Produkt von der Förderkette getrennt wird und die Übertragung des Produkts erleichtert wird.

## Revendications

1. Maillon (10) pour chaînes transporteuses du type qui sont définis par au moins un noyau central (1) à partir duquel s'étend une pluralité de saillies (2, 2', 3, 3'), dans lequel :
le noyau central (1) s'étend transversalement à une direction de transport de la chaîne transporteuse ;
les saillies latérales (2, 2', 3, 3') s'étendent dans la direction opposée à celle-ci dans la direction du transport :
dans lequel le maillon (10) comprend :
deux saillies latérales plus longues (2, 2'), une première saillie latérale plus longue (2) située près d'une première extrémité du noyau central (1) et une deuxième saillie latérale plus longue (2') située près d'une deuxième extrémité du noyau central (1), la première saillie latérale plus longue (2) et la deuxième saillie latérale plus longue (2') étant sur des côtés différents dudit noyau central (1) ; et deux saillies latérales plus courtes (3, 3'), une première saillie latérale plus courte (3) et une deuxième saillie latérale plus courte (3'), les saillies latérales plus courtes (3, 3') étant situées parallèles aux saillies latérales plus longues (2, 2') par paires, c'est-à-dire, la première saillie latérale plus longue (2) est parallèle à la deuxième saillie latérale plus courte (3'), tandis que la première saillie latérale plus courte (3) est parallèle à la deuxième saillie latérale plus longue (2'), chacune des paires étant située sur un côté du noyau central (1), les saillies latérales (2, 2', 3, 3') étant décalées l'une de l'autre, de telle manière que la première saillie latérale plus courte (3) est situé au centre de la portion du noyau (1) comprise entre la première saillie latérale plus longue (2) et la deuxième saillie latérale plus courte (3'), et par conséquent, ladite deuxième saillie latérale plus courte (3') est située au centre de la portion du noyau (1) comprise entre la première saillie latérale plus courte (3) et la deuxième saillie latérale plus longue (2'),
**caractérisé en ce que** le maillon comprend une distance d'extrémité (d1) d'au moins une extrémité du maillon supérieure à une épaisseur supérieure (e1) dans lequel : la distance d'extrémité (d1) est la distance entre un axe de rotation (eg), qui est un axe coaxial où des maillons consécutifs tournent entre eux, et l'extrémité du maillon (10) ;
l'épaisseur supérieure (e1) est la longueur entre l'axe de rotation (eg) et une surface supérieure du maillon (10).

2. Maillon (10) selon la revendication 1, dans lequel le noyau central (1) a une section triangulaire.

3. Maillon (10) selon l'une quelconque des revendications 1 à 2, dans lequel chacune des saillies latérales (2, 2', 3, 3') comprend un trou traversant (4), lesdits trous traversants (4) coïncidant entre eux par deux, c'est-à-dire il y a une paire de trous coïncidents (4) de chaque côté du noyau central (1) définissant un arbre (40) parallèle audit noyau central (1).

4. Module (100) pour une chaîne transporteuse comprenant une pluralité de maillons (10) selon l'une quelconque des revendications 1 à 3.

5. Chaîne transporteuse comprenant une pluralité de modules (100) selon la revendication 4, ou une pluralité de maillons (10) selon l'une quelconque des revendications 1 à 4, et **caractérisée en ce que** pendant les rotations de la chaîne transporteuse autour d'un axe il y a au moins une circonférence supérieure au rayon de rotation de la chaîne transporteuse en raison de la différence dans le rayon de rotation des saillies latérales plus longues (2, 2'), dans laquelle ladite différence dans le rayon de rotation est précisément la distance d'extrémité (d1), qui provoque que les saillies latérales plus longues (2, 2') soulèvent le produit pendant les rotations, séparant le produit de la chaîne transporteuse et facilitant le transfert du produit.
